# EUROPEAN PATENT SPECIFICATION

(11) **EP 1 081 658 B1**
(45) Date of publication and mention of the grant of the patent: **16.07.2008**
(21) Application number: 00306981.2
(22) Date of filing: 16.08.2000
(51) Int. Cl.: G07B 15/00

(54) **Toll collection system**
Gebührenerfassungssystem
Système de perception des droits de péage

(30) Priority: 30.08.1999 JP 24406499
(43) Date of publication of application: 07.03.2001
(73) Proprietor: KABUSHIKI KAISHA TOSHIBA, Kawasaki-shi Kanagawa-ken Tokyo (JP)
(72) Inventor: Naito, Kazutoshi, Minato-ku, Tokyo (JP); Matsuyama, Hirokazu, Minato-ku, Tokyo (JP); Machiyama, Hirokiyo, Minato-ku, Tokyo (JP)
(74) Representative: Brookes Batchellor LLP

(56) References cited:
- EP-A- 0 577 328
- EP-A- 0 616 302
- GB-A- 2 303 943
- US-A- 4 463 339

## Description

### BACKGROUND OF THE INVENTION

### 1. Field of the Invention

The present invention relates to a toll collection system that is brought into toll road facilities, a portable terminal to control maintenance test of this toll collection system and a maintenance test method of this system.

### 2. Description of the Related Art

The toll collection process in a toll collection system of a toll road using magnetic cards has been so far mainly a manned process. Many of equipment comprising a toll collection system are provided with a human interface function. In recent years, as a system enabling the unmanned process, an ETC (Electronic Toll Collection) system utilizing wireless cards has been developed. This ETC system is expected to become the main stream of the toll collection in the future.

The principle of this ETC system is the unmanned processing at a traffic lane and it is possible to eliminate the human interface function from various equipment arranged on a traffic lane. However, users are not able to enjoy versatile services that are peculiar to the manned system from this ETC system and it is therefore necessary to supplement this point by providing many guiding displays. Accordingly, it can be said that the ETC system has a structural feature that many roadside equipment are arranged in a wide range.

So, the maintenance test of various equipment comprising such the ETC system is considered here. Normally, the maintenance test of roadside equipment is executed in such a manner that an operating direction for the maintenance test is given from an equipment that generally controls these equipment and the behavior of the equipment given with this direction is checked.

At this time, in order to check the behavior of, for instance, a traffic light and a toll gate display installed on the roof of a tollbooth, etc., two persons are required; that is, one person for operating a traffic lane controller and another person for actually checking the behavior of equipment. The roadside equipment comprising the ETC system are installed in a wide range and a time is needed for moving between the position of a traffic lane controller and a position where a traffic light and a toll gate display can be seen. Further, this have an influence on reliability of the maintenance test.

### SUMMARY OF THE INVENTION

It is an object of the present invention to provide a toll collection system, a handy terminal and a maintenance test method of a toll collection system using a handy terminal, capable of reducing persons required for the maintenance test and improving efficiency of the maintenance test.

Further, it is another object of the present invention to provide a toll collection system and a handy terminal that enabled it to easily transfer data from a traffic lane controller to a higher rank apparatus instead of a data transmission line when a trouble occurred on this data transmission line connecting the traffic lane controller and its higher rank apparatus.

It is a further object of the present invention to provide a toll collection system and a handy terminal that enabled it to register vehicle data on an on board unit (OBU) at a tollbooth.

It is an additional object of the present invention to provide a toll collection system and a handy terminal capable of inspecting the wireless communication function of an OBU at the same time when registering data on the OBU.

Accordingly the present invention provides a toll collection system for collecting tolls via an on board unit (OBU) 1) installed on a vehicle (A), the system comprising:
a roadside installation comprising a plurality of equipments including wireless communication equipment (8,9) to perform wireless communication with the OBU (1) and a traffic lane controller (10) to control the plurality of equipments,
characterized by further comprising:
a portable wireless terminal (60) equipped with means (62) for inputting a command for starting a maintenance test of an equipment comprised in the installation and for transmitting it to the traffic lane controller (10) through the wireless communication equipment (8,9), the traffic lane controller starting the maintenance test according to the command received from the portable wireless terminal (60).

Further, according to the present invention, there is provided a method of carrying out a maintenance test in an equipment of a roadside installation of a toll collection system comprising a plurality of equipment including wireless communication equipment (8, 9) for wireless communication with a vehicle (A) on board unit (OBU) (1) and a traffic lane controller for controlling the plurality of equipments (10), the method comprising:
transmitting a command to start the equipment maintenance test to the traffic lane controller (10), by operating a portable wireless terminal (60) through the wireless communication equipment (8, 9); and
starting the equipment maintenance test according to the command received from the portable wireless terminal (60).

### BRIEF DESCRIPTION OF THE DRAWINGS

FIG. 1 is a block diagram showing the configuration of equipment arranged at an entrance lane of the ETC system in an embodiment of the present invention;
FIG. 2 is a block diagram showing the configuration of equipment arranged at an exit lane of the ETC system in an embodiment of the present invention;
FIG. 3 is a block diagram showing the structure of an OBU (On Board Unit) that is used in the ETC system shown in FIG. 1 and FIG. 2;
FIG. 4 is a perspective view showing the external appearance of a handy terminal in an embodiment of the present invention;
FIG. 5 is a block diagram showing the structure of the handy terminal shown in FIG. 4;
FIG. 6 is a flowchart showing the duty of a maintenance person using the handy terminal shown in FIG. 4;
FIG. 7A ~ FIG. 7D are flowcharts showing the maintenance tests of equipment using the handy terminal;
FIG. 8 is a flowchart showing a trouble recovery process using the handy terminal;
FIG. 9 is a diagram showing a detailed data file format;
FIG. 10 is a diagram showing a duty file format;
FIG. 11 is a diagram showing a print format at the time of the trouble recovery; and
FIG. 12 is a flowchart showing a vehicle data registration process using the handy terminal.

### DETAILED DESCRIPTION OF THE PREFERRED EMBODIMENTS

A preferred embodiment of the present invention applied to a wireless card toll collection system (hereinafter referred to as "ETC System") is described below.

The ETC system is available in two types; a closed system comprising an entrance lane and an exit lane to issue a ticket at the entrance lane and receiving a ticket at the exit lane, and an open system to collect tolls at the entrance lane only. An ETC system adopting the closed system will be described here.

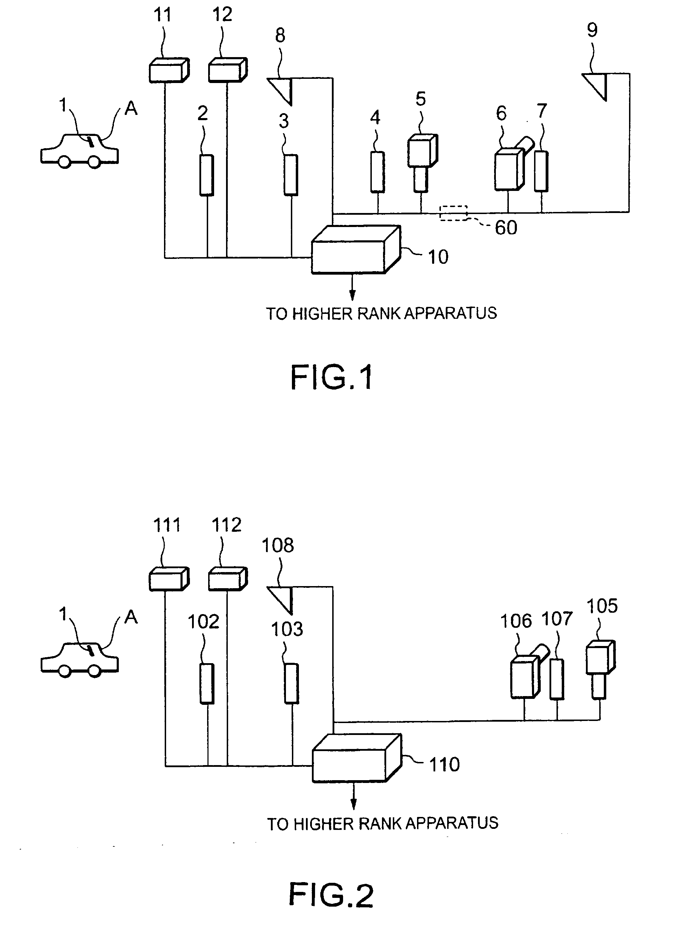

FIG. 1 shows the configuration of equipment arranged at the entrance lane of the ETC system. The equipment arranged at the entrance lane are a first vehicle detector 2, a second vehicle detector 3, a third vehicle detector 4, a roadside display 5, a barrier 6, a fourth vehicle detector 7, a first antenna 8 (a first roadside wireless equipment), a second antenna (a second roadside wireless equipment), a traffic lane controller 10, a traffic light 11, a toll gate display 12 and a vehicle type discriminator (not shown). Further, Reference Numeral 1 shows an on board unit (OBU) installed in a vehicle A.

The traffic lane controller 10 is connected to the above-mentioned equipment arranged at the entrance lane via a data transmission cable. The traffic lane controller 10 is further connected to a higher rank apparatus. The vehicle type discriminator (not shown) is an equipment to totally discriminate a type of the vehicle A entering into the entrance lane using various detectors, measuring equipment, image pickup device, etc.

The traffic light 11 displays the approval or disapproval of the vehicle A to enter into the entrance lane. The toll gate display 12 displays the substance of the entrance lane processing. These traffic light 11 and the toll gate display 12 are installed at the roof of the gate, etc. so that an entering vehicle A is able to see them from afar.

The first vehicle detector 2 detects a vehicle A entering into the entrance lane and notifies the traffic lane controller 10 of detection of the vehicle A. The first antenna 8 executes the wireless communication with an OBU 1 of the vehicle A for the ETC processing according to the direction to start the wireless communication from the traffic lane controller 10 that is notified of the entry of a vehicle from the first vehicle detector.

Hereinafter, vehicles with which the wireless communication for the ETC process is properly completed are called as "ETC Vehicle". Vehicles that caused a communicate error during the wireless communication for the ETC process, vehicles applicable to those listed in a negative list for vehicles that did not pay tolls or committed other illegalities, and vehicles passed the terms of validity are treated equal to those vehicles without an OBU installed. These vehicles are called as "Non-ETC Vehicles".

The roadside display 5 displays the completion of the ETC process and stop/approval for passing to a vehicle driver.

The second vehicle detector 3 is arranged at the downstream side of the first vehicle detector 2 in the moving direction of vehicles and generates a timing for finishing the wireless communication with a non-ETC vehicle. In other words, when detecting the pass of a vehicle A, the second vehicle detector 3 notifies it to the traffic line controller 10. When the wireless communication with the vehicle A for the ETC process is not properly completed before receiving this notification, the traffic lane controller 10 judges that the vehicle A is a non-ETC vehicle and ends the wireless communication with the vehicle A.

The third vehicle detector 4 is arranged at the further downstream side of the second vehicle detector 3 in the moving direction of vehicles and generates the display turn-off timing of the roadside display 5. That is, when detecting a vehicle A, the third vehicle detector 4 notifies this to the traffic lane controller 10. When receiving the notification of the vehicle detection, the traffic lane controller 10 generates a direction to turn off the display of the roadside display 5.

The barrier 6 controls the approval or disapproval of the passage of a vehicle A by, for instance, a crossing gate, etc. according to the direction from the traffic lane controller 10. The fourth vehicle detector 7 detects the vehicle A passed the barrier and notifies it to the traffic lane controller 110. When receiving the notice of the vehicle passage from the fourth vehicle detector 7, the traffic lane controller 10 controls the barrier 6 to close the gate.

The second antenna 9 makes the wireless communication with the OBU 1 of an ETC vehicle of which passage through the barrier 6 is detected by the third vehicle detector 4.

Next, the configuration of equipment arranged at the exit lane of the ETC system will be described.

FIG. 2 shows the configuration of equipment arranged at the exit lane of the ETC system. The equipment arranged at the exit lane are a first vehicle detector 102, a second vehicle detector 103, a roadside display 105, a barrier 106, a third vehicle detector 107, an antenna 108 (a roadside wireless equipment), a lane controller 110, a traffic light 111 and a toll gate display 112. Further, Reference Numeral 1 shows an On Board Unit (OBU) installed in a vehicle A.

The lane controller 110 is connected to the above-mentioned equipment arranged at the exit lane via a data transmission cable. The lane controller 110 is further connected to a higher rank apparatus (not shown). The traffic light 111 displays the approval or not approval of the entrance of a vehicle A into the exit lane. The toll gate display 112 displays the substance of the lane processing. These traffic light 111 and the toll gate display 112 are installed on a roof of the gate so that an entering vehicle is able to see them from a distant place.

The first vehicle detector 102 detects a vehicle A entering into the exit lane and notifies the detection of the vehicle A to the lane controller 110. The antenna 108 makes the wireless communication for the ETC process with the OBU 1 of the vehicle A according to a direction for starting the wireless communication from the lane controller 110 after receiving the notification of entry of the vehicle from the first vehicle detector 102.

The second vehicle detector 103 is arranged at the downstream side of the first vehicle detector 102 in the movement direction of a vehicle and generates a timing to terminate the wireless communication with a non-ETC vehicle. That is, when detecting a vehicle A, the second vehicle detector 103 notifies it to the lane controller 110. If the wireless communication with the vehicle A for the ETC processing is not properly completed before receiving this notification, the lane controller 110 judges that the vehicle A is a non-ETC vehicle and terminates the wireless communication with the vehicle A.

The barrier 106 controls the approval or disapproval of the passage of a vehicle A by, for instance, a crossing gate, etc. according to a direction from the lane controller 110.

The roadside display 105 displays the completion of the ETC processing, stop and approval of the passage to a vehicle driver. The third vehicle detector 107 detects a vehicle A passed through the barrier 106 and notifies a display turn-off timing of the roadside display 105 and a closing timing of the barrier 106 to the lane controller 110.

In the case of the closed system, there is a check barrier lane in addition to the entrance and exit lanes. The check barrier lane is a lane for recording a route data. The hardware configuration of equipment arranged at this check barrier lane is the same as that of the equipment arranged at the exit lane and the check barrier lane, and the check barrier lane and the exit lane can be changed mutually by changing a software.

Next, the structure of the on board unit (OBU) is explained.

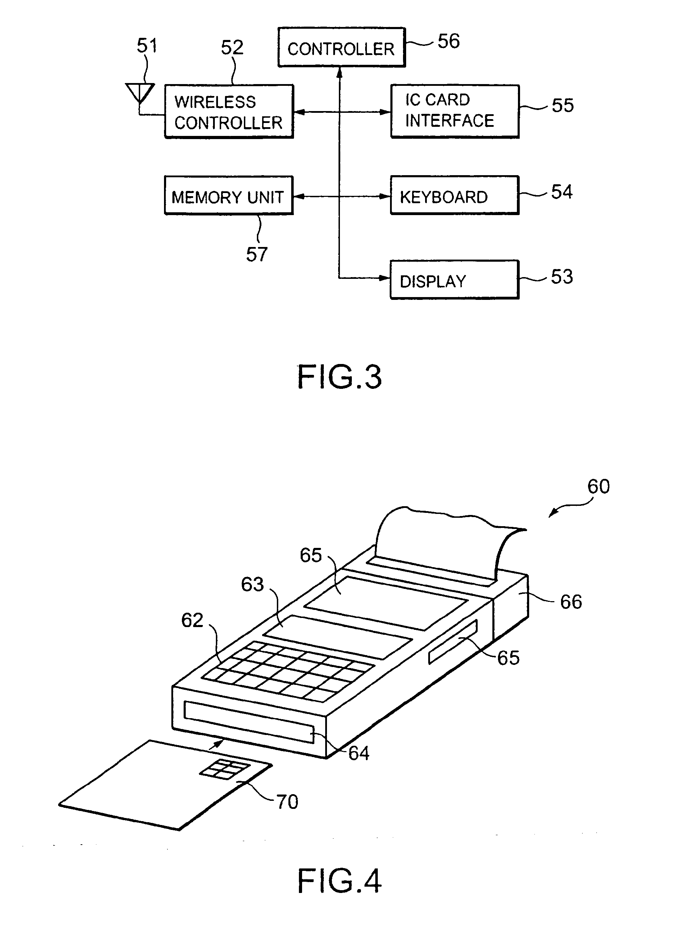

FIG. 3 shows the structure of the on board unit 1. The on board unit comprises an On Board Unit (hereinafter referred to as "OBU") equipped with the wireless communication function, a control display panel and an IC card.

On an IC card, an ID No. of the IC card, an expiration date of an contract and special contract data (applicability of the discount to physically handicapped persons) and in addition, the balance data (these data are named generically as "Charging Data") in the case of the prepaid card are recorded.

The OBU 1 comprises an antenna 51 for communicating with an antenna installed at each lane, a wireless controller (RF unit) 52 for controlling the antenna, a display 53 equipped with an LED lamp for displaying the operation guidance to users, a keyboard 54 equipped with plural buttons, an IC card interface 55 that is capable of reading and writing of IC card, a controller 56 for the entire control of the OBU and a memory unit 57. In the memory unit 57, vehicle data including factors determining type of vehicle such as length, number of axles, weight, purpose of use and features, and ID data and the like are registered.

Next, the entire operation of this ETC system will be explained.

Hereinafter, the equipment arranged at the traffic lane side is generically called as "Roadside System".
When an IC card is inserted into the IC card interface 55 of the OBU 1, the IC card checks justifiability of the OBU 1 and if justifiable, transmits the charging data stored on it to the OBU 1. The OBU 1 stores the charging data received from the IC card through the IC card interface 55 in the memory unit 57.

Next, the operations carried out at the entrance lane of this ETC system will be explained.

First, when detecting a vehicle A entering into the entrance lane, the first vehicle detector 2 notifies the traffic lane controller 10 of the detection of vehicle entrance. Upon receipt of this notification, the traffic lane controller 10 controls the first antenna 8 and starts the communication inquiry with the OBU of the entering vehicle A.

When the generation of an inquiry from a proper antenna is recognized, the OBU 1 reads out the charge data and the vehicle data stored in the memory unit 57 and returns the vehicle data to the roadside system (the traffic lane controller 10).

When confirming that the response from the OBU 1 is properly received through the first antenna 8, the traffic lane controller 10 checks the expiration date and the prepaid balance being not zero contained in the charge data on the response. If the data are proper, the traffic lane controller 10 sends the data specifying the entrance such as Road No., Tollbooth No., Passing Time (Date & Time), Lane No. (hereinafter, these data are called as "First Entrance Data") to the OBU 1.

When the first entrance data could be properly received, the OBU 1 notifies the completion of receiving of the data to the roadside system (the traffic lane controller 10). Upon receipt of the notice of completion of receiving from the OBU 1, the roadside system (the traffic lane controller 10) judges the vehicle A to be a vehicle equipped with a proper OBU (an ETC vehicle) and displays the completion of the ETC processing on the roadside display 5. Further, if there is no preceding vehicle at this point of time, the roadside system directs the barrier 6 to open the gate and if there is a preceding vehicle, directs to open the gate after completing the processing of the preceding vehicle.

At the stage when the vehicle A passed the second vehicle detector 3, the traffic lane controller 10 directs the roadside display 5 to turn off the display of the ETC process completion.

Thereafter, the vehicle A passes through the barrier 6 and then, the fourth vehicle detector 7 successively. When the fourth vehicle detector 7 detects the passage of the vehicle A, the traffic lane controller 10 directs the barrier 6 to close the gate and starts the communication and inquiry with the OBU 1 through the second antenna 9.

Here, when recognizing that the inquiry is from the proper antenna, the OBU 1 sends ID No. that is pre-notified from an IC card and ID No. that is registered in the memory unit 57 to the roadside system.

When a response could be received properly from the OBU 1, the roadside system (the traffic lane controller 10) compares ID No. of IC card received through the second antenna 9 and ID No. of the OBU 1 with those ID Numbers already received through the first antenna 8, respectively. As a result, when they agree each other, the vehicle type judging result already obtained by he vehicle type judging device (not shown), the vehicle data sent from the OBU 1 and the comparison data of the ID Nos. (hereinafter, these data are called as "Second Entrance Data") are sent wirelessly to the OBU 1 using the second antenna 9.

Further, the vehicle type discrimination by the vehicle type discriminator is performed totally using various detecting and measuring equipment, an image pickup device, etc. during the period from when a vehicle A entering is detected till the vehicle passed the barrier 6. As there are various methods, detailed descriptions will be omitted.

When the proper receipt of the second entrance data is confirmed, the OBU 1 notifies the completion of receiving to the roadside system (the traffic lane controller 10). At the same time, the OBU 1 records the properly received first and second entrance data on an IC card.

Next, the operations performed at the check barrier lane of this ETC system will be explained. Further, the configuration of the equipment installed at the check barrier lane is the same as that of those equipment installed at the exit lane shown in FIG. 2 and therefore, the operations of the equipment arranged at the exit lane are explained below as the equipment arranged at the check barrier lane.

At the check barrier lane, when detecting the entry of a vehicle A, the first vehicle detector 102 notifies the detection of entry of the vehicle A to the lane controller 110. The lane controller 110 controls the antenna 108 and starts the communication inquiry to the OBU 1 of the entering vehicle A.

When recognizing the inquiry from a proper antenna, the OBU 1 reads out the charging and vehicle data in addition to the entrance data (the first and second entrance data) from the memory unit 57 and transmits them to the lane controller 110.

When confirming that the response from the OBU 1 could be properly received by the antenna 108, the lane controller 110 checks justifiability of a passing route and passing time based on the received entrance data. If they are proper, ID numbers contained in the charging data and the vehicle data are collated with a negative list. When justifiability of the ID numbers is confirmed by this collation with the negative list, the lane controller 110 transmits the barrier passing verification data (Barrier No., Passing Date, Lane No.) to the OBU 1.

When receiving the barrier passing verification data properly, the OBU 1 transmits a receiving completion notice to the roadside system and at the same time, records the barrier passing verification data on an IC card.

Next, the operations performed at the exit lane of this ETC system will be explained.

At the exit lane, the first vehicle detector 102 detects the entry of a vehicle A and transmits a notice of entry of the vehicle A to the lane controller 110. The lane controller 110 controls the antenna 108 and starts the communication inquiry to the OBU 1 of the entering vehicle A.

The OBU 1, recognizing the inquiry from a proper antenna, reads out charging and vehicle data from the memory unit 57 in addition to the entrance data (the first and second entrance data) recorded at the entrances and transmits them to the lane controller 110.

The lane controller 110 confirms the proper receipt of the response from the OBU 1 by the antenna 108, computes a toll based on the received entrance data and collates ID numbers contained in the charging data and the vehicle data with the negative list. When justifiability of the ID numbers is confirmed by the collation with the negative list, the lane controller 110 transmits the combined entrance and exit data (Tollbooth No., Passing Date, Lane No., Toll) to the OBU 1 as a using history.

When properly receiving the using history, the OBU 1 returns the receipt completion notice to the roadside system and records the using history on an IC card.

Next, a handy terminal that is used in a maintenance test of equipment comprising the ETC system described above will be explained.

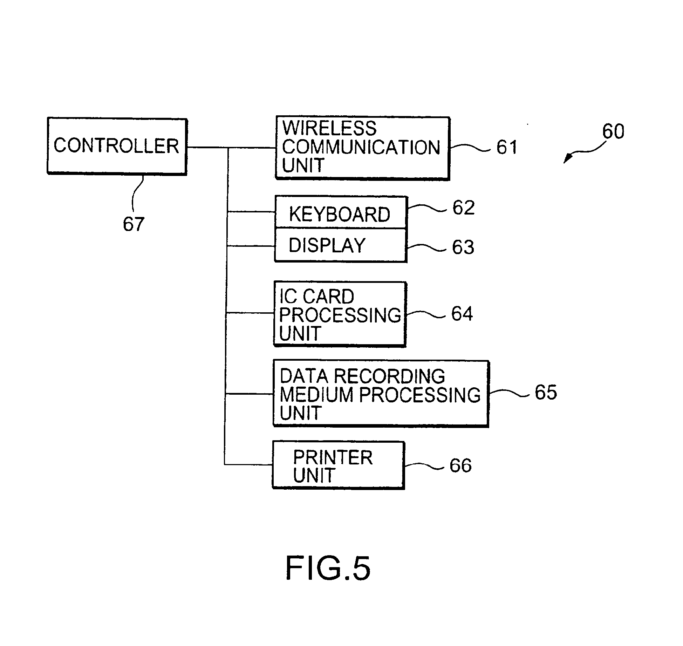

FIG. 4 is a block diagram showing the external appearance of a handy terminal 60 and FIG. 5 is a block diagram showing the structure of the handy terminal 60.

As illustrated in these diagrams, this handy terminal 60 comprises a wireless communication unit 61, a keyboard 62, a display 63, an IC card processing unit 64, a data recording medium processing unit 65, a printer unit 66 and a control unit 67.

The wireless communication unit 61 performs the wireless communication with an antenna (a roadside wireless unit) of the ETC system. The keyboard 62 is for making the key input by user. The display 63 displays an operating guidance for user. The keyboard 62 and the display 63 are of touch panel type capable of making the input and display on the same screen. The IC card processing unit 64 reads/writes data from/to an IC card 70, e.g. a user identifying IC card, IC cards that are used in the ETC system. The data recording medium processing unit 65 records maintenance data, operation check results, etc. accumulated in the handy terminal 60 on such a detachable recording medium as Smart Media (Trademark of Toshiba), flash cards, etc.

The printer unit 66 is used for printing out maintenance data, operation check result, etc. accumulated in the handy terminal 60 and, for instance, a thermal sensitive printer, etc. are used. The control unit 67 controls these units. Further, this control unit 67 is provided with a memory to store an application software required for processing various functions and various data (maintenance data, operation check results, etc.).

As described above, the ETC system comprises various kinds of equipment arranged over a broad range for each traffic lane. For instance, of the equipment arranged at the entrance lane shown in FIG. 1, the traffic light 11 for indicating approval/disapproval of entry of a vehicle into a traffic lane and the toll gate display 12 for displaying the substance of processing of the traffic lane are installed on the roof of the gate and the like so that a vehicle entering is able to recognize them at a far point. The first antenna 108 is installed at the head of the vehicle entering side and the roadside display 5 to show the result of wireless processing is arranged at nearly the central position of the traffic lane. Further, the barrier 6 to indicate the approval/disapproval of a vehicle to pass is arranged at the starting side of the traffic lane. And the traffic lane controller 10 for controlling these equipment is arranged on an island of the traffic lane.

So far, the maintenance functions for checking the operations of equipment arranged by distributing in a wide range were all added to the traffic lane controller 10 and directions were given to the equipment from the traffic lane controller 10 and the results of operation were checked visually. However, the behaviors of the traffic light 11 and the toll gate display 12 installed on the roof of the gate and the roadside display 5, etc. couldn't be directly checked visually from the position where the traffic lane controller 10 is installed and therefore, at least one operator of the traffic lane controller 10 and one operation checker, total two persons were needed.

The above-mentioned handy terminal 60 is provided with a function to transmit a directing signal to perform the maintenance test of the equipment using the wireless communication equipment retained by the roadside system. That is, the handy terminal 60 is able to give a direction for the maintenance test to the traffic lane controller 10 wirelessly at the position where the operation of every individual equipment can be directly checked visually. The traffic lane controller 10 receives the directive signal for the maintenance test from the handy terminal 60 and gives a direction for the maintenance operation to equipment that is subject to the maintenance. Accordingly, by using this handy terminal, it becomes possible to perform the maintenance test of the equipment by one maintenance person.

Further, the handy terminal 60 has a function to transmit vehicle entering/starting detection signals by the vehicle detectors 2, 3, 4 and 7 falsely to the traffic lane controller 10. This function can be used as shown below at the stage of, for instance, the ETC system development.

In the ETC system, the wireless communication starting/ terminating timings with the OBU, the turn-on/off timings of the roadside display 5, the opening/closing timings of the barrier 6, etc. are defined conforming to the moving state of a vehicle as described above. Therefore, the maintenance test of the ETC system is normally performed by actually running a vehicle. In particular, in the functional checking of the traffic lane controller 10 at the development stage, it is necessary to decide the optimum operating timings of the equipment by analyzing the running example of a vehicle in various patterns. By using the above-mentioned function of the handy terminal of the present invention, various running patterns of a vehicle can be reproduced as required without actually running a vehicle and therefore, it becomes possible to improve maintenance efficiency as well as developing efficiency.

Next, the functions of the handy terminal 60 of the present invention will be explained in detail.

The handy terminal 60 has such functions as maintenance persons' duty that is a total checking test to a higher rank apparatus, a maintenance test, trouble recovery and vehicle data registration.

The functions of the handy terminal 60 are restricted according to a kind of IC card inserted after turning the power source ON. IC cards that can be inserted are IC card for maintenance person, IC card for manager, etc. When an IC card for maintenance person is inserted, the handy terminal 60 is placed in the state to be able to operate a maintenance person's duty and the maintenance test. When an IC card for manager is inserted, the handy terminal 60 can be used as a data registering terminal for recording vehicle data in an OBU.

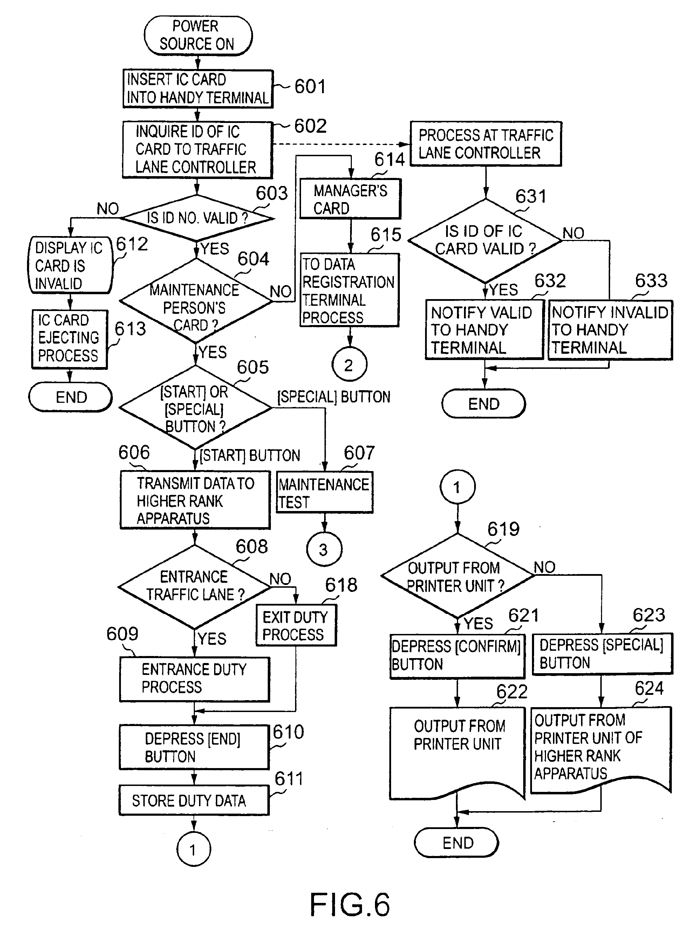

First, a maintenance person's duty function will be explained. The flowchart of this maintenance person's duty is shown in FIG. 6.

As shown in FIG. 6, an IC card 70 for maintenance person is inserted into the IC card processing unit 64 of the handy terminal 60 (Step 601). Hereafter, from the inserted IC card, ID No. is notified to the control unit 67 in the handy terminal 60. Then, the control unit 67 transmits the notified ID No. of the IC card to the traffic lane controller 10 through the wireless communication equipment of the ETC system and inquires its validity (Steps 602 and 60.3).

The traffic lane controller 10 judges validity of the IC card in regard to the inquiry from the handy terminal 60 (Step 631). If it is a valid IC card, the handy terminal 60 is notified that the IC card is valid (Step 632). If the IC card is invalid, the handy terminal 60 is so notified and it is displayed on the display 63 (Step 633).

When notified that the IC card is valid, the handy terminal 60 judges whether a maintenance person depressed the "START" button or "SPECIAL" button of the keyboard 62 (Step 605). When the "START" button is depressed, the duty start data is transmitted to the traffic lane controller 10 (Step 606). When the "SPECIAL" button on the keyboard is depressed, the maintenance test function is started (Step 607).

When the duty start data is received, the traffic lane controller 10 investigates the example of duty of that maintenance person (for instance, the entrance lane duty or the exit lane duty) referring to an operator identification table from the ID No. of a maintenance person included in the received data, and sends the result of investigation to the handy terminal 60.

Upon receipt of the data on the type of duty from the traffic lane controller, the handy terminal 60 informs its substance to a maintenance person by displaying it on the display 63. A maintenance person executes the duty following the type of duty directed from the traffic lane controller 10 (Steps 608 and 609 or Steps 608 and 618). At the end of duty, a maintenance person displays a duty report format on the display 63 of the handy terminal 60 and enters required matters. Thereafter, when the "END" button on the keyboard 62 is depressed (Step 610), the data (the duty data) entered onto the format is stored on a recording medium by the data recording medium processing unit 65 (Step 611).

Thereafter, if it is desired to print the duty data, it is required to depress the "CONFIRM" or "SPECIAL" button following depressing the "END" button. When the "CONFIRM" button is depressed (Step 621), the duty data is printed by the printer unit 66 of the handy terminal 60 (Step 622). When the "SPECIAL" button is depressed (Step 623), the duty data is transmitted to the traffic lane controller 10 from the handy terminal 60 via the wireless communication equipment of the ETC system and the duty data is printed by a printer unit of a higher rank equipment (Step 624).

Further, when the IC card is judged to be invalid by the traffic lane controller 10 in Step 603, the handy terminal 60 is so notified by the traffic lane controller 10 (Step 633) and displayed on the display 63 of the handy terminal 60 (Step 612). Thereafter, the IC card judged invalid is ejected (Step 613).

Further, when an IC card for manager is inserted after the power source is turned ON, the step goes to the data registration process (Steps 604, 614 and 615). This data registration process will be explained later.

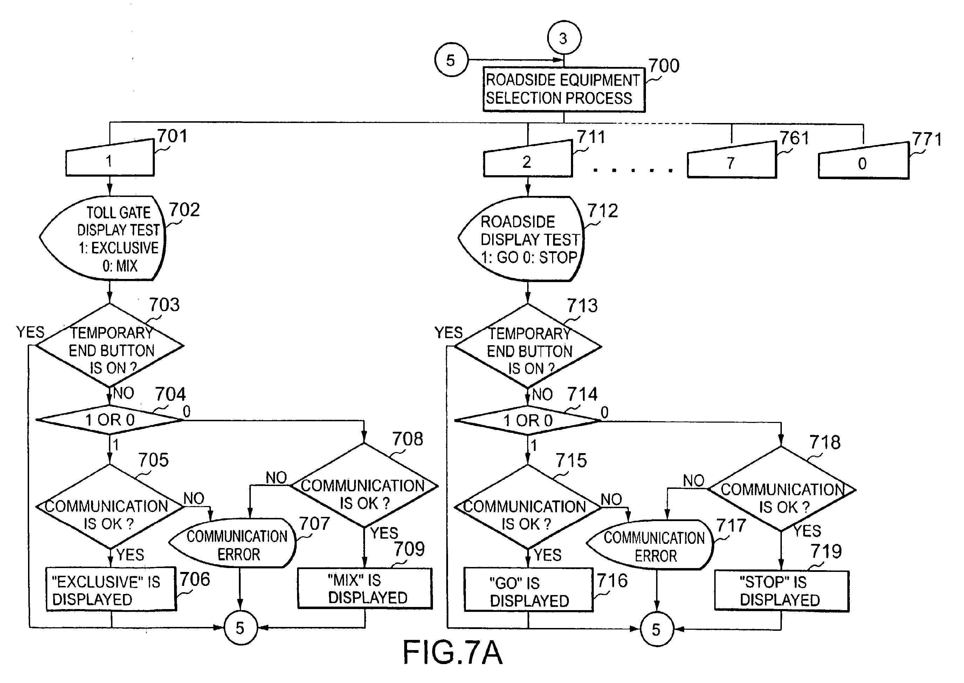

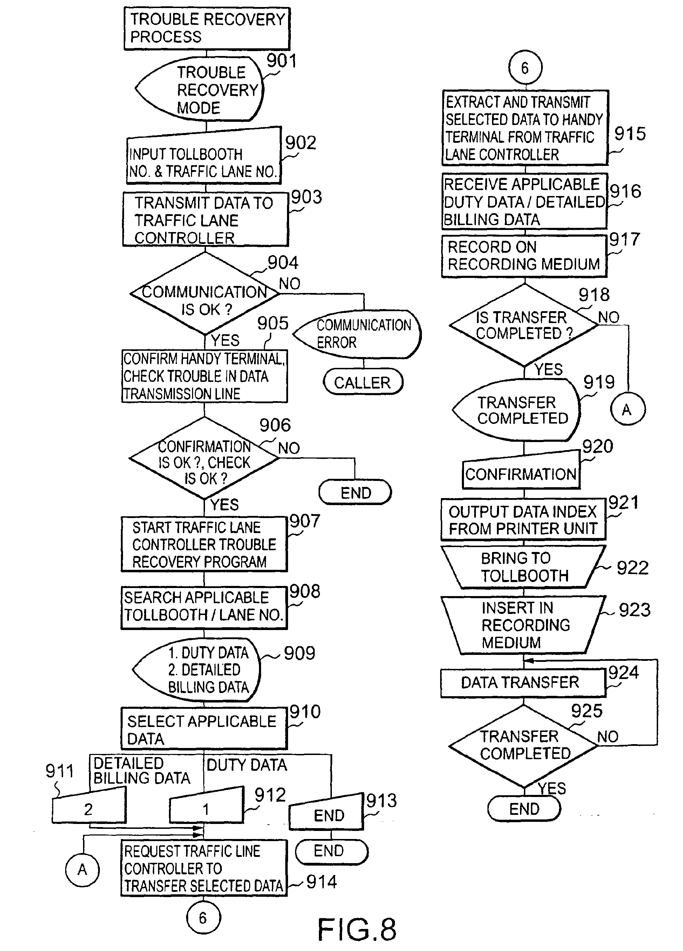

Next, the maintenance test function of the handy terminal 60 will be explained using flowcharts shown in FIG. 7A ~ 7B and FIG. 8.

When the "SPECIAL" button is depressed after the IC card for maintenance person is inserted into the handy terminal 60, Test Item Numbers [0] ~ [7] are displayed on the display 63 and when one Test Item No. is selected, the test mode corresponding to the selected number starts (Step 607 in FIG. 6).

In FIG. 7A, when the roadside equipment selecting process is started (Step 700) and Test Item No. [1] is selected on the selection screen of the display 63 of the handy terminal 60 (Step 701), "TOLL GATE DISPLAY TEST 1: EXCLUSIVE, 0: MIX" is displayed on the display 63 and the test mode of the toll gate display 12 starts (Step 702). Here, it is judged whether a maintenance person depressed the "TEMPORARY END" button with the intention to change the mode to another mode (Step 703). When the "TEMPORARY END" button is depressed, the step returns to the roadside equipment selection process (Step 700).

When the "TEMPORARY END" button is not depressed in Step 703, it is further judged whether "1" or "0" is selected (Step 704).

When "1" is selected, the changeover of the display to "EXCLUSIVE" can be directed. The direction given by a maintenance person is transmitted wirelessly to the traffic lane controller 10 from the handy terminal 60 and the communication is satisfactorily executed (Step 705), the "EXCLUSIVE" is displayed on the toll gate display 12 (Step 706). A maintenance person confirms that "EXCLUSIVE" display is made on the toll gate display 12.

Further, if the communication from the handy terminal 60 to the traffic lane controller 10 is not satisfactorily executed in Step 705, the communication error is displayed on the display 63 of the handy terminal 60 (Step 707) and the step returns to the roadside equipment selection process 700.

When "0" is selected in Step 704, it is possible to direct to changeover the display to "MIX". When the direction given by a maintenance person is transmitted wirelessly to the traffic lane controller 10 from the handy terminal 60 and the communication is satisfactorily executed (Step 708), "MIX" is displayed on the toll gate display 12 (Step 709). A maintenance person confirms that "MIX" is displayed on the toll gate display 12.

In FIG. 7A, when the roadside equipment selection process starts (Step 700) and [2] is selected on the selection screen of the display 63 of the handy terminal 60 (Step 711), "ROADSIDE DISPLAY TEST 1: GO, 0: STOP" is displayed on the display 63 and the process goes in the test mode of the roadside display 5 (Step 712). Here, it is judged whether a maintenance person depressed the "TEMPORARY END" button with the intention to change the mode to other modes (Step 713). When the "TEMPORARY END" button is depressed, the step returns to the roadside equipment selection process (Step 700).

When the "TEMPORARY END" button is not depressed in Step 713, it is judged whether "1" or "0" is selected (Step 714).

When "1" is selected, the changeover to the "GO" display can be directed. When the direction given from a maintenance person is transmitted wirelessly to the traffic lane controller 10 from the handy terminal 60 and the communication is satisfactorily executed (Step 715), "GO" is displayed on the roadside display 5 (Step 716). A maintenance person confirms that "GO" is displayed on the roadside display 5.

Further, if the communication from the handy terminal 60 to the traffic lane controller 10 is not satisfactorily executed in Step 715, a communication error is displayed on the display 63 of the handy terminal 60 (Step 717) and the step returns to the roadside equipment selection process 700.

When "0" is selected in Step 714, the changeover to display "STOP" can be directed. When the direction given by a maintenance person is transmitted wirelessly from the handy terminal 60 to the traffic lane controller 10 and the communication is satisfactorily executed (Step 718), the "STOP" is displayed on the roadside display 5 (Step 719). A maintenance person confirms that the "STOP" is displayed on the roadside display 5.

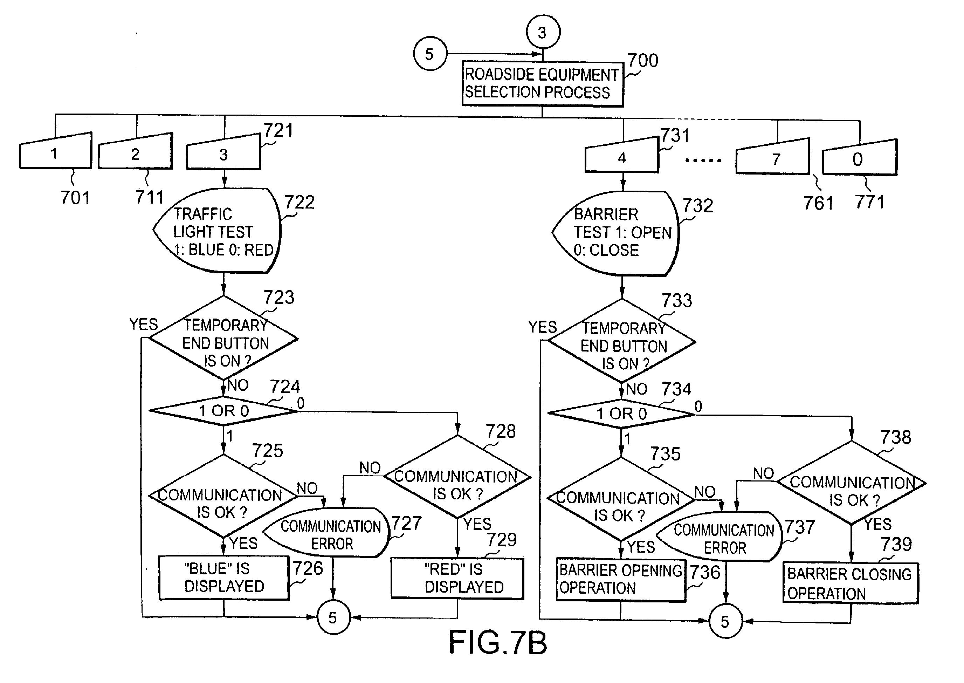

In FIG. 7B, when the roadside equipment selection process starts (Step 700) and [3] is selected on the selection screen of the display 63 of the handy terminal 60 (Step 721), the "TRAFFIC LIGHT 1: BLUE, 0: RED" is displayed on the display 63 and the test mode of the traffic light 11 starts (Step 722). Here, it is judged whether a maintenance person depressed the "TEMPORARY END" button with the intention to change the mode to other mode (Step 723). When the "TEMPORARY END" button is depressed, the step returns to the roadside equipment selection process (Step 700).

When the "TEMPORARY END" button is not depressed in Step 723, it is judged whether "1" or "0" is selected (Step 724).

When "1" is selected, the changeover of the light to "BLUE" can be directed. This direction given from a maintenance person is transmitted wirelessly from the handy terminal 60 to the traffic lane controller 10 and the communication is satisfactorily executed (Step 725), "BLUE" of the traffic light 11 is turned ON (Step 726). A maintenance person confirms that the "BLUE" of the traffic light 11 is turned ON.

Further, when the communication from the handy terminal 60 to the traffic lane controller 10 is not satisfactorily executed in Step 725, a communication error is displayed on the display 63 of the handy terminal 60 (Step 727) and the step returns to the roadside equipment selection process 700.

When "0" is selected in Step 724, the changeover to the "RED" lighting can be directed. The direction given by a maintenance person is transmitted from the handy terminal 60 to the traffic lane controller 10 wirelessly and the communication is satisfactorily executed (Step 728), the "RED" of the traffic light 11 is turned ON (Step 729). A maintenance person confirms that the "RED" of the traffic light is turned ON.

In FIG. 7B, when the roadside equipment selection process starts (Step 700) and [4] is selected on the selection screen of the display 63 of the handy terminal 60 (Step 731), "BARRIER TEST 1: OPEN, 0: CLOSE" is displayed on the display 63 and the barrier 6 test mode starts (Step 732). Here, it is judged whether a maintenance person depressed the "TEMPORARY END" with an intention to change the mode to other mode (Step 733). When the "TEMPORARY END" button is depressed, the step returns to the roadside equipment selection process (Step 700).

When the "TEMPORARY END" button is not depressed in Step 733, it is judged whether "1" or "0" is selected (Step 734).

When "1" is selected, the changeover of the gate of the barrier 6 to "OPEN" can be directed and the direction given from a maintenance person is transmitted wirelessly to the traffic lane controller 10 from the handy terminal 60. And when the communication is satisfactorily executed (Step 735), the gate of the barrier 6 opens (Step 736). A maintenance person confirms that the gate of the barrier 6 is opened.

Further, when the communication from the handy terminal 60 to the traffic lane controller 10 is not satisfactorily executed in Step 735, a communication error is displayed on the display 63 of the handy terminal 60 (Step 737) and the steps returns to the roadside equipment selection process 700.

When "0" is selected in Step 734, the changeover of the gate of the barrier 6 to "CLOSE" can be directed. The direction given from a maintenance person is transmitted wirelessly from the handy terminal to the traffic lane controller 10 and the communication is satisfactorily executed (Step 738), the gate of the barrier 6 is closed (Step 739). A maintenance person confirms that the gate of the barrier 6 is closed.

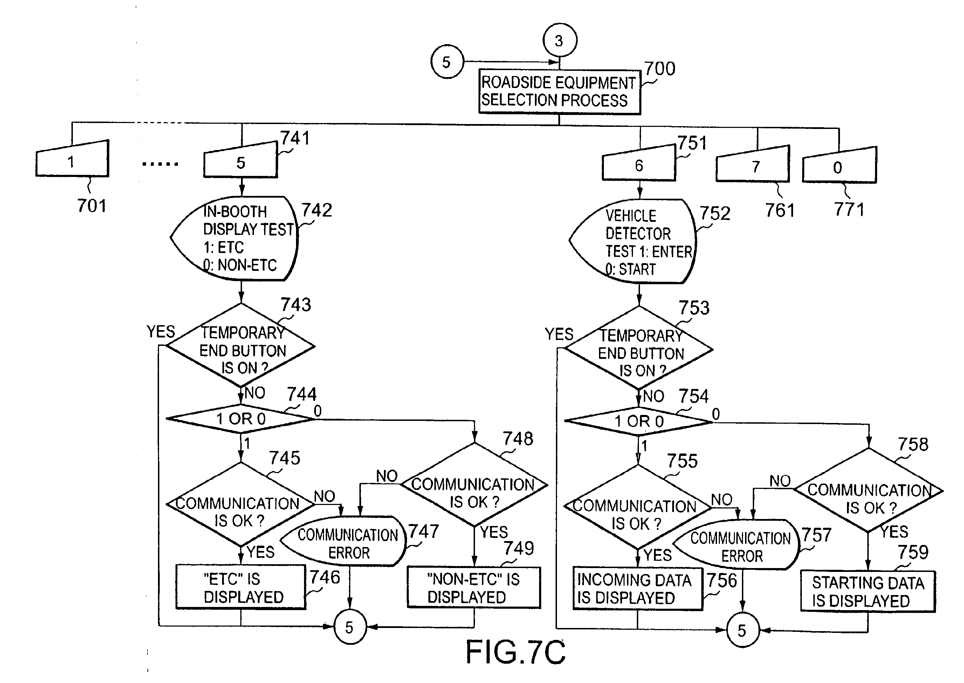

In FIG. 7C, when the roadside equipment selection process starts (Step 700) and "5" is selected on the selection screen of the display 63 of the handy terminal 60 (Step 741), "IN-BOOTH DISPLAY TEST 1: ETC, 0: NON-ETC" is displayed on the display 63 and the in-booth display test mode starts (Step 742). Here, it is judged whether a maintenance person depressed the "TEMPORARY END" button with an intention to change the mode to other mode (Step 743). When the "TEMPORARY END" button is depressed, the step returns to the roadside equipment selection process (Step 700).

When the "TEMPORARY END" button is not depressed in Step 743, it is judged whether "1" or "0" is selected (Step 744).

When "1" is selected, the changeover to the "ETC" display can be directed. The direction given by a maintenance person is transmitted wirelessly from the handy terminal 60 to the traffic lane controller 10 and when the communication is satisfactorily executed (Step 745), the "ETC" is displayed on the display in the tollbooth display (Step 746). A maintenance person confirms that the "ETC" is displayed on the display in the tollbooth.

Further, when the communication from the handy terminal 60 to the traffic lane controller 10 is not satisfactorily executed in Step 745, a communication error is displayed on the display 63 of the handy terminal 60 (Step 747) and the step returns to the roadside equipment selection process 700.

When "0" is selected in Step 744, the changeover to the "NON-ETC" display can be directed and the direction given by a maintenance person is wirelessly transmitted from the handy terminal 60 to the traffic lane controller 10 and when the communication is satisfactorily executed (Step 748), the "NON-ETC" is displayed on the display in the tollbooth. A maintenance person confirms that "NON-ETC" is displayed on the display in the tollbooth.

In FIG. 7C, the step goes in the roadside equipment selection process (Step 700) and when [6] is selected on the selection screen on the display 63 of the handy terminal 60 (Step 751), the "VEHICLE DETECTOR TEST 1: ENTER, 0: START) is displayed on the display 63 (Step 752) and the system enters into the vehicle detector test mode (Step 52). Here, it is judged whether a maintenance person depressed the "TEMPORARY END" button with an intention to change the mode to other mode (Step 753). When the "TEMPORARY END" button is depressed, the step returns to the roadside selection process (Step 700).

When the "TEMPORARY END" button is not depressed in Step 753, it is judged whether "1" or "0" is selected (Step 754).

When "1" is selected, a maintenance person can direct to generate a vehicle entrance detecting signal falsely for every individual vehicle detectors 2, 3, 4 and 7. The direction given from this maintenance person is transmitted wirelessly to the traffic lane controller 10 from the handy terminal 60 and when the communication is satisfactorily executed (Step 755), the entrance data is displayed on the display 63 of the handy terminal 60 (Step 756). A maintenance person confirms that the entrance data is displayed on the display 63 of the handy terminal 60.

Further, when the communication with the traffic lane controller 10 from the handy terminal 60 is not satisfactorily executed in Step 755, a communication error is displayed on the display 63 of the handy terminal 60 (Step 757) and the step returns to the roadside equipment selection process 700.

When "0" is selected in Step 744, a maintenance person can direct to generate a vehicle start detection signal falsely for every individual vehicle detectors 2, 3, 4 and 7. When the direction given by the maintenance person is transmitted wirelessly from the handy terminal 60 to the traffic lane controller 10 and the communication is satisfactorily executed (Step 758), the starting data is displayed on the display 63 of the handy terminal 60 (Step 759). A maintenance person confirms that the starting data is displayed on the display 63 of the handy terminal 60.

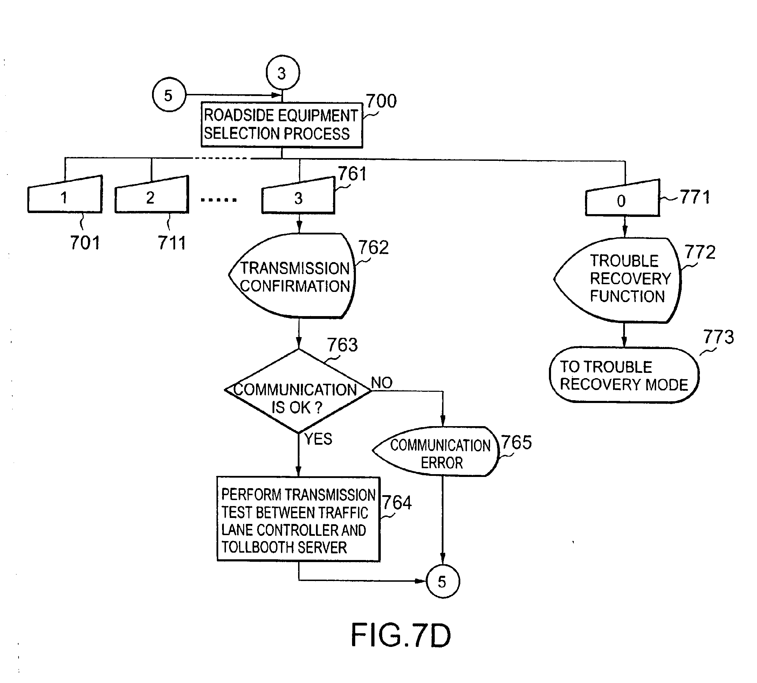

In FIG. 7D, when the step goes into the roadside equipment selection process (Step 700) and [7] is selected on the selection screen of the display 63 of the handy terminal 60 (Step 761), "TRANSMISSION CHECK" is displayed on the display 63 and the system goes into the transmission check mode between the traffic lane controller 10 and a tollbooth server (Step 762). Here, when the "CHECK" button of the handy terminal 60 is depressed and the communication state is satisfactory (Step 763), the transmission test between the traffic lane controller 10 and the tollbooth server is executed (Step 764).

If the communication with the traffic lane controller 10 from the handy terminal 60 is not satisfactorily executed, a communication error is display on the display 63 of the handy terminal 60 (Step 765) and the step returns to the roadside equipment selection process 700.

In FIG. 7D, the roadside equipment selection process starts (Step 700) and [0] is selected on the selection screen of the display 63 of the handy terminal 60 (Step 771), "TROUBLE RECOVER FUNCTION" is displayed on the display 63 (Step 772) and the trouble recover mode starts (Step 773).

In the above embodiment, the maintenance test is executed with the handy terminal 60 carried by a maintenance person. The maintenance test may be executed by embedding the handy terminal 60 under a road over which vehicles pass at a position between the antennas 8 and 9 as shown in FIG. 1.

That is, a starting command to direct the traffic lane controller 10 to start the maintenance test and a predetermined time to transmit this starting command via the wireless communication unit 61 and the antennas 8 and 9 are stored in the control unit 67 of the handy terminal 60. At the predetermined time, the control unit 67 transmits the starting command wirelessly to the antennas 8 and 9 for transmitting the maintenance test starting direction from the wireless communication unit 61. When the antennas 8 and 9 receive the starting command, the traffic lane controller 10 executes various maintenance tests to operate various equipment including the traffic light 11. Results of the various executed maintenance tests are transmitted to a host equipment (higher rank equipment) by the traffic lane controller 10.

Further, the results of various executed maintenance tests may be transmitted to the control unit 67 of the handy terminal 60 via the antennas 8 and 9 and the wireless communication unit 61 by the traffic lane controller 10.
At this time, the results are transmitted wirelessly to a host equipment via the wireless communication unit 61 by the handy terminal 60.

Next, the trouble recovery of the ETC system will be explained.

The ETC system transmits duty data and detailed billing data collected by the traffic lane controller to a tollbooth server through a high-speed data transmission line (for instance, an optical cable) and data collected from all traffic lane controllers are controlled by a tollbooth server. If the data transmission lines connecting the traffic lane controllers and the tollbooth server become unusable by, for instance, cut troubles, etc., volume of data accumulated in the traffic lane controllers does nothing but increases until the trouble of the data transmission line is recovered and the duty cannot be continued due to the limited storage capacity or detailed billing data cannot be transmitted to a central system from the tollbooth server.

The handy terminal 60 of this embodiment has a trouble recovery function to continue the data transmission to a tollbooth server from the traffic lane controller by taking data accumulated in the traffic lane controller and deliver to the tollbooth as it is when any trouble occurred in the data transmission line between the traffic lane controller and the tollbooth server.

Next, the operation of the trouble recovery by the handy terminal 60 will be explained based on a flowchart shown in FIG. 8.

When the trouble recovery mode starts, an input screen of an objective tollbooth and Traffic Lane No. appears (Step 901). After the data input for required items on this screen (Step 902), a request for starting the trouble recovery is transmitted wirelessly to the traffic lane controller (Step 903).

When the communication between the handy terminal 60 and a traffic lane controller is satisfactory (Step 904) and the traffic lane controller receives a request for trouble recovery start from the handy terminal 60, the traffic lane controller confirms ID No. of the handy terminal 60 contained in the request and checks the presence of a trouble of the data transmission line (Step 905). After confirming that it is a proper handy terminal 60 and the data transmission line trouble actually exists (Step 906), the traffic lane controller starts a trouble recovery program (Step 907).

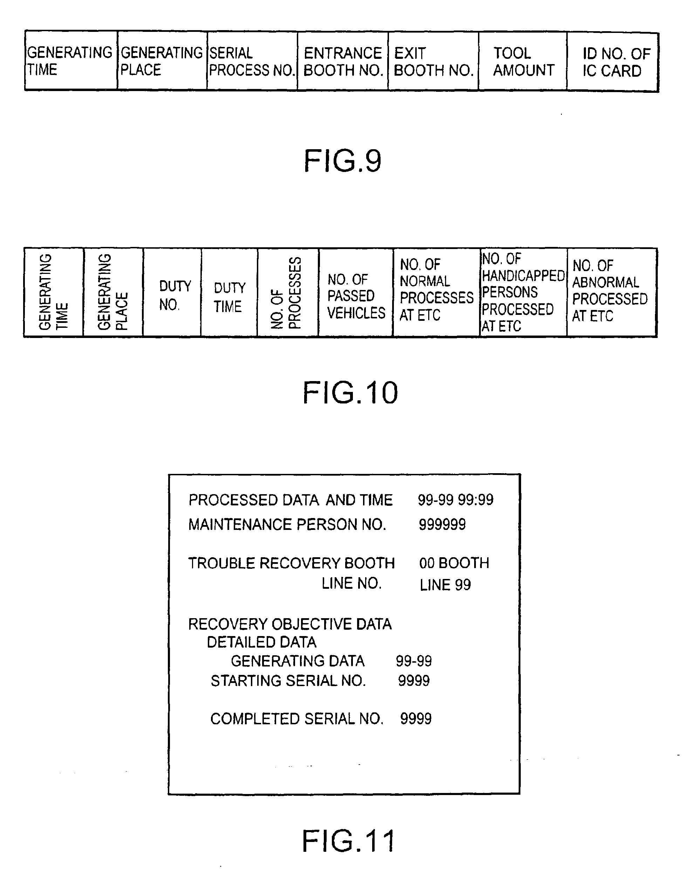

The trouble recovery program searches detailed billing data and duty data applicable to a tollbooth and Lane No. designated by the handy terminal 60 from a file accumulated in the traffic lane controller (Step 908). The trouble recovery program prepares index data of the searched detailed billing data and duty data and transmits it wirelessly to the handy terminal 60. A detailed billing data format and a duty data format are shown in FIG. 9 and FIG. 10, respectively.

The handy terminal 60 displays the index data of the duty data and the detailed billing data received from the traffic lane controller on the display 63 (Step 909).
On the screen displaying this index data, a maintenance person is able to select data required for the trouble recovery (Step 910). When the required data is selected by a maintenance person (Steps 911 and 912), a transfer request of the selected data is transmitted from the handy terminal 60 to the traffic lane controller (Step 914). In response to this transfer request, the traffic lane controller transfers the selected data wirelessly to the handy terminal 60 (Step 915).

When receiving the data transferred from the traffic lane controller (Step 916), the handy terminal 60 records the received data on a recording medium by the data recording medium processing unit 65 (Step 917). When the transfer of all requested data is completed (Step 918), it is so displayed on the display 63 of the handy terminal 60 (Step 919). Here, when the "CONFIRM" button on the keyboard is depressed by a maintenance person (Step 920), the index data relative to the data recorded on a recording medium is printed out by the printer unit 66 (Step 921). An example of the printed index data is shown in FIG. 11.

On the other hand, the tollbooth server is provided with an equipment capable of reading/writing from/to the recording medium. After moved to the tollbooth, a maintenance person sets a recording medium in the tollbooth server read/write equipment and transfers the data recorded on the recording medium to the tollbooth server by operating the tollbooth server.

Thus, even when a trouble occurs on a data transfer cable between the traffic lane controller and the tollbooth server, the data transfer to the tollbooth server from the traffic server can be maintained.

Next, a function of this handy terminal 60 to register vehicle data to an OBU will be explained.

As described in the above, the OBU 1 has registered data relative to a vehicle to which it is installed. Normally, vehicle data is recorded on an IC card by inputting data through an exclusive terminal at an OBU shop, etc. and this IC is registered on an OBU and the vehicle data is transferred on the OBU from the IC card.

The handy terminal 60 of this embodiment has a function to register vehicle data on an OBU using the wireless communication equipment of the ETC system.

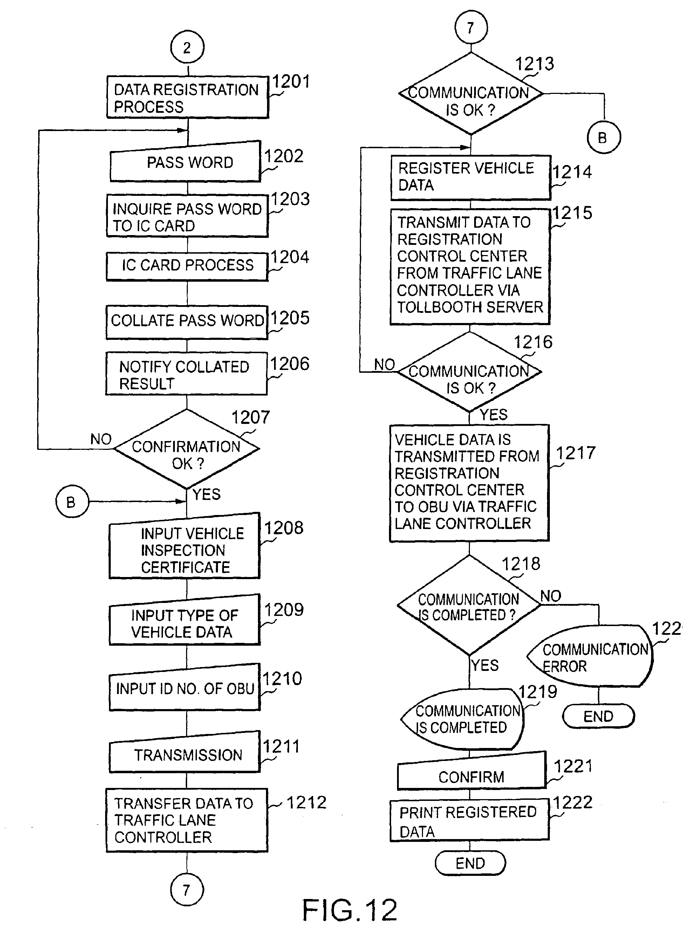

FIG. 12 shows definite steps of vehicle data registration process using the handy terminal 60.

This vehicle data registration process is started when an IC card for manager is inserted in Step 614 after the power source to the handy terminal 60 is turned ON as shown in FIG. 6. Further, for the wireless communication with a traffic lane controller by this handy terminal 60 for the vehicle data registration, the roadside wireless equipment in the non-working state (a closed traffic lane) can be used at a tollbooth.

First, a manager inputs a pass word (Step 1201). Then, the pass word is confirmed by collating the input pass word with a pass word registered on the IC card for manager (Steps 1202 ~ 1207). When the pass word is confirmed, a manager investigates the length, height, width, number of axles, riding capacity, movable load and gross weight of the vehicle from the vehicle inspection certificate and input these data into the handy terminal 60 (Step 1208). In succession, a manager checks the data on the vehicle inspection certificate and type of vehicle judging data required for deciding a toll (for instance, the number plate data, a purpose of use in case of a bus (a sight-seeing bus/a route bus) and inputs these data into the handy terminal 60 (Step 1209). Further, he inputs an ID No. of an OBU that is subject to the vehicle data registration (Step 1210) and after confirming the input contents, depress the transmission button (Step 1211). The data input to the handy terminal 60 is then transferred wirelessly to a traffic lane controller (Step 1212).

When recognizing the vehicle data transferred from the handy terminal 60, the traffic lane controller transmits the data to a registration control center via a tollbooth server and requests the registration of vehicle data (Steps 1213 ~ 1215).

Upon receipt of this request, the registration control center performs the center registration of the vehicle data and further, performs the security protecting process of the data and then, transmits the vehicle data to an OBU via the tollbooth server and the traffic lane controller (Step 1217). Thus, the registration of the vehicle data to an OBU is achieved.

When the data transmission to an OBU is completed, this is notified to the handy terminal 60 via the tollbooth server and the traffic lane controller from the registration control center and is displayed on the display 63 of the handy terminal 60 (Step 1219). In succession, a manger depresses the "CONFIRM" button (Step 1221), the registered data is printed out by the printer unit 66 (Step 1222).

In this embodiment, the use of the data registration function of the handy terminal 60 is limited to only persons who have an IC card for manager by considering importance of the vehicle data registration business.

As described in the above, as a result of the data registration function to an OBU given to the handy terminal, not only the vehicle data registration to an OBU at a tollbooth is enabled but also the wireless communication function of an OBU can be inspected simultaneously when registering vehicle data. Further, if any vehicle data is erroneously recorded in an OBU when purchased, it can be corrected at a tollbooth. That is, if there is a difference between the type of vehicle judged by the roadside system and the type of vehicle registered in an OBU, it is possible to rewrite a correct vehicle data in a traffic lane at a tollbooth.

As explained in the above, according to the present invention, as the equipment maintenance test can be started by operating the handy terminal, a maintenance person is able to direct the start of the maintenance test at a position where he is able to directly monitor the behavior of equipment subject to the test, and it becomes possible to make the operation for the maintenance test and the monitor of equipment behavior by one maintenance person. Thus, it becomes possible to reduce the number of maintenance persons and improve reliability of the maintenance test.

Further, according to the present invention, as it is so designed that data accumulated in the traffic lane controller can be taken and maintained in the handy terminal using the wireless communication equipment of the roadside system, the handy terminal can be used as a means to deliver data from the traffic lane controller to a higher rank apparatus. Accordingly, even when a trouble occurs in the data transmission system such as cables directly connecting the traffic lane controller with a higher rank apparatus, data can be delivered from the traffic lane controller to a higher rank apparatus via the handy terminal. Thus, data is not stagnated in the traffic lane controller and it becomes possible to continuously operate the system stably.

Further, according to the resent invention, as it is enabled to register data on an OBU by operating the handy terminal, it becomes possible to register vehicle data on an OBU at a tollbooth. In addition, it becomes possible to register vehicle data on an OBU at a toll booth by transmitting input data to an OBU from the handy terminal via the traffic lane controller and also, it is enabled to inspect the wireless communication function of an OBU simultaneously with the registration of data on an OBU.

## Claims

1. A toll collection system for collecting tolls via an on board unit (OBU) (1) installed on a vehicle (A), the system comprising:
a roadside installation comprising a plurality of equipments including wireless communication equipment (8,9) to perform wireless communication with the OBU (1) and a traffic lane controller (10) to control the plurality of equipments, **characterized by** further comprising:
a portable wireless terminal (60) equipped with means (62) for inputting a command for starting a maintenance test of an equipment comprised in the installation and for transmitting it to the traffic lane controller (10) through the wireless communication equipment (8,9), the traffic lane controller starting the maintenance test according to the command received from the portable wireless terminal (60).

2. A toll collection system according to claim 1, wherein the portable terminal (60) includes:
selection means (62, 701, 711, 721, 731, 741, 751, 761, 771) for selecting which equipment of the installation is to be tested.

3. A toll collection system according to claim 2, wherein the selection means includes:
first display means (63) for displaying which equipment out of a plurality of equipments of the roadside installation is to be selected for a maintenance test.

4. A toll collection system according to claim 3, wherein the display means (63) includes:
second display means (702, 712, 722, 732, 742, 752) for displaying that at least two operations can be tested during the maintenance test of one piece of equipment selected by the selection means (62, 701 711. 721, 731, 741, 751, 761, 771) out of the maintenance test of the plurality of equipments displayed by the first display means (63).

5. A toll collection system according to claim 3, wherein the equipment to be tested includes a toll gate display (12), a roadside display (5), a traffic light (11), a barrier (6), and a display in a booth.

6. A toll collection system according to claim 1, wherein the traffic lane controller (10) includes:
means for transmitting accumulated data to a higher rank apparatus.

7. A toll collection system according to claim 6; wherein the portable terminal (60) includes:
means for receiving and storing the accumulated data of the traffic lane controller (10) using the wireless communication equipment (8, 9) of the roadside installation.

8. A toll collection system according to claim 1, wherein the portable terminal (60) includes:
registration means for registering data on the OBU (1).

9. A toll collection system according to claim 1, wherein the portable terminal (60) is adapted to be positioned under a road over which vehicles pass.

10. A toll collection system according to claim 9, wherein the portable terminal (60) is equipped with a wireless communication unit (61) for receiving the result of the maintenance test by the traffic lane controller (10) via the wireless communication equipment (8, 9) of the roadside installation and for transmitting the received maintenance test result to a higher rank apparatus.

11. A toll collection system according to claim 8, wherein the registration means includes:
input means (62) for inputting data to be registered on the OBU (1); and
transmission means (61) for transmitting the input data to the OBU (1) via the traffic lane controller using the wireless communication equipment (8, 9).

12. A method of carrying out a maintenance test in an equipment of a roadside installation of a toll collection system comprising a plurality of equipments including wireless communication equipment (8, 9) for wireless communication with a vehicle (A) on board unit (OBU) (1) and a traffic lane controller for controlling the plurality of equipments (10), the method comprising:
transmitting a command to start the equipment maintenance test to the traffic lane controller (10), by operating a portable wireless terminal (60) through the wireless communication equipment (8, 9); and
starting the equipment maintenance test according to the command received from the portable wireless terminal (60).

13. The maintenance test method according to claim 12, further comprising the step of:
selecting which maintenance test of the plurality of equipments is to be performed.

14. A maintenance test method according to claim 13, further comprising the step of:
displaying which maintenance test of the plurality of equipments is to be selected.

15. A maintenance test method according to claim 14, further comprising the step of:
displaying different operations that can be tested during the maintenance test of one piece of equipment selected from the plurality of equipments maintenance tests displayed in the displaying step.

16. A maintenance test method according to claim 13, wherein the maintenance test of the plurality of equipments selected in the selecting step is a test of at least one of a toll gate display (12), a roadside display (5), a traffic light (11), a barrier (6), and a display in a booth.

## Patentansprüche

1. Gebührenerfassungssystem zur Erfassung von Gebühren mittels einer ON-Board-Einheit (OBU) (1), installiert an einem Fahrzeug, aufweisend:
eine fahrbahnseitige Installation, aufweisend eine Mehrzahl an Ausrüstungen, aufweisend drahtlose Kommunikationsausrüstung (8,9) zur Durchführung drahtloser Kommunikation mit der OBU (1) und einem Verkehrsfahrbahn-Controller (10) zur Steuerung der Mehrzahl der Ausrüstungen, **gekennzeichnet durch** das weitere Aufweisen
eines transportablen drahtlosen Terminals (60), ausgestattet mit Mitteln (62) zur Eingabe eines Befehls zum Starten eines Instandsetzungstests eines Equipments, der Bestandteil einer Installation ist, und zum Übertragen dieses zum Verkehrsfahrbahn-Controller (10) mittels des drahtlosen Kommunikations-Equipments (8, 9), wobei der Verkehrsfahrbahn-Controller den Instandsetzungstest startet gemäß des vom tragbaren drahtlosen Terminal (60) empfangenen Befehls.

2. Gebührenerfassungssystem nach Anspruch 1, wobei das portable Terminal (60) aufweist:
Auswahlmittel (62, 701, 711, 721, 731, 741, 751, 761, 771) zum Auswählen, welches Equipment der Installation zu testen ist.

3. Gebührenerfassungssystem nach Anspruch 2, wobei das Auswahlmittel beeinhaltet:
erste Anzeigemittel (63) zum Anzeigen, welches Equipment aus einer Mehrzahl der Equipments der fahrbahnseitigen Installation für einen Instandsetzungstest auszuwählen ist.

4. Gebührenerfassungssystem nach Anspruch 3, wobei das Anzeigemittel (63) beinhaltet:
zweite Anzeigemittel (702, 712, 722, 732, 742, 752) zum Anzeigen, daß wenigstens zwei Operationen getestet werden können, während des Instandsetzungstests eines Teils des Equipments, ausgewählt durch die Auswahlmittel (62, 701, 711, 721, 731, 741, 751, 761, 771) des Instandsetzungstests aus der Mehrzahl an Equipment, dargestellt durch das erste Anzeigemittel (63).

5. Gebührenerfassungssystem nach Anspruch 3, wobei das zu testende Equipment beinhaltet eine Gebührengateanzeige (12), eine Fahrbahnseitenanzeige (5), ein Verkehrslicht (11), eine Schranke (6) und eine Anzeige in einer Kabine.

6. Gebührenerfassungssystem nach Anspruch 1, wobei der Verkehrsfahrbahn-Controller (10) aufweist:
Mittel zur Übertragung gesammelter Daten zu einem höherrangigen Apparat.

7. Gebührenerfassungssystem nach Anspruch 6, wobei das portable Terminal (60) aufweist:
Mittel zum Empfangen und Speichern der gesammelten Daten des Verkehrsfahrbahn-Controllers (10), unter Verwendung des drahtlosen Kommunikations-Equipments (8, 9) der Fahrbahnseiteninstallation.

8. Gebührenerfassungssystem nach Anspruch 1, wobei das portable Terminal (60) beinhaltet:
Registrierungsmittel zum Registrieren von Daten an der OBU (1).

9. Gebührenerfassungssystem nach Anspruch 1, wobei das portable Terminal (60) gestaltet ist, um unterhalb der Verkehrsfahrbahn positioniert zu werden, über die Fahrzeuge passieren.

10. Gebührenerfassungssystem nach Anspruch 9, wobei das portable Terminal (60) ausgestattet ist mit einer drahtlosen Kommunikationseinheit (61) zum Empfangen des Ergebnisses des Instandhaltungstests durch den fahrbaren Verkehrsfahrbahn-Controller (10) über das drahtlose Kommunikations-Equipment (8, 9) der fahrbahnseitigen Installation und zum Übertragen des empfangenen Instandhaltungstestresultates zu einem höherrangigen Apparat.

11. Gebührenerfassungssystem nach Anspruch 8, wobei das Registrierungsmittel beeinhaltet:
Eingabemittel (62) zur Eingabe von zu registrierenden Daten an der OBU (1); und Übertragungsmittel (61) zum Übertragen der Eingabedaten zur OBU (1) über den Verkehrsfahrbahn-Controller unter Verwendung des drahtlosen Kommunikations-Equipments (8, 9).

12. Verfahren zur Durchführung eines Instandhaltungstests in einem Equipment einer fahrbahnseitigen Installation eines Gebührenerfassungssystems, aufweisend eine Mehrzahl an Equipment, aufweisend ein drahtloses Kommunikations-Equipment (8, 9) zur drahtlosen Kommunikation mit einer Fahrzeug (A) ON-Board-Einheit (OBU) (1) und einen Verkehrsfahrbahn-Controller zum Steuern der Mehrzahl des Equipments (10), wobei das Verfahren aufweist:
das Übermitteln eines Befehls, um den Equipment-Instandhaltungstest zu starten, zum Verkehrsfahrbahn-Controller (10) durch Betreiben eines Terminals (60) durch das drahtlose Kommunikations-Equipment (8, 9) und
Starten des Equipment-Instandhaltungstests gemäß des vom portablen drahtlosen Terminal (60) empfangenen Befehls.

13. Instandhaltungstestverfahren nach Anspruch 12, weiterhin aufweisend:
das Auswählen, welcher Instandhaltungstest aus der Mehrzahl an Equipment auszuführen ist.

14. Instandhaltungstestverfahren nach Anspruch 13, weiterhin aufweisend:
das Anzeigen, welcher Instandhaltungstest aus der Mehrzahl des Equipments auszuwählen ist.

15. Instandhaltungstestverfahren nach Anspruch 14, weiterhin aufweisend:
das Anzeigen unterschiedlicher Vorgänge, die geprüft werden können während des Instandhaltungstest eines Teils des Equipments, ausgewählt aus der Mehrzahl an Equipment-Instandhaltungstests, angezeigt im Anzeigeschritt.

16. Instandhaltungstestverfahren nach Anspruch 13, wobei der Instandhaltungstest der Mehrzahl an im Auswahlschritt ausgewählten Equipment ein Test wenigstens eines Elements ist aus Gebührengateanzeige (12), Fahrbahnseitenanzeige (5), Lichtzeichen (11), Schranke (6) und einer Anzeige in einer Kabine.

## Revendications

1. Système de perception de droits de péage pour percevoir des droits de péage via une unité (1) embarquée (OBU) installée dans un véhicule (A), le système comprenant :
une installation routière comportant une pluralité d'équipements comprenant un équipement (8, 9) de communication sans fil pour réaliser une communication sans fil avec l'OBU (1) et un dispositif de commande (10) de voie de circulation pour commander la pluralité d'équipements, **caractérisé en ce qu'**il comprend en outre :
un terminal (60) sans fil portatif équipé de moyens (62) destinés à introduire une commande pour lancer un essai de maintenance d'un équipement compris dans l'installation, et à transmettre au dispositif de commande (10) de voie de circulation par l'intermédiaire de l'équipement (8, 9) de communication sans fil, le dispositif de commande de voie de circulation lançant l'essai de maintenance conformément à l'instruction reçue en provenance du terminal (60) sans fil portatif.

2. Système de perception de droits de péage suivant la revendication 1, dans lequel le terminal (60) portatif comprend :
des moyens (62, 701, 711, 721, 731, 741, 751, 761, 771) de sélection destinés à sélectionner celui des équipements de l'installation qui doit être soumis à l'essai.

3. Système de perception de droits de péage suivant la revendication 2, dans lequel les moyens de sélection un premier moyen (63) d'affichage destiné à afficher celui des équipements d'une pluralité d'équipements de l'installation routière, qui doit être sélectionné pour un essai de maintenance.

4. Système de perception de droits de péage suivant la revendication 3, dans lequel le moyen (63) d'affichage comprend :
des deuxièmes moyens (702, 712, 722, 732, 742, 752) d'affichage destinés à afficher au moins deux opérations qui peuvent être soumises à un essai au cours de l'essai de maintenance d'un équipement sélectionné par les moyens (62, 701, 711, 721, 731, 741, 751, 761, 771) de sélection de l'essai de maintenance de la pluralité d'équipements, affiché par le premier moyen (63) d'affichage.

5. Système de perception de droits de péage suivant la revendication 3, dans lequel l'équipement à soumettre à l'essai comprend un dispositif (12) d'affichage de poste de péage, un dispositif (5) d'affichage routier, un feu (11) de circulation, une barrière (6) et un dispositif d'affichage dans une cabine.

6. Système de perception de droits de péage suivant la revendication 1, dans lequel le dispositif de commande (10) de voie de circulation comprend :
des moyens destinés à émettre des données accumulées vers un dispositif de rang supérieur.

7. Système de perception de droits de péage suivant la revendication 6, dans lequel le terminal (60) portatif comprend :
des moyens destinés à recevoir et à stocker les données accumulées du dispositif de commande (10) de voie de circulation, à l'aide de l'équipement (8, 9) de communication sans fil de l'installation routière.

8. Système de perception de droits de péage suivant la revendication 1, dans lequel le terminal (60) portatif comprend :
des moyens d'enregistrement destinés à enregistrer des données dans l'OBU (1).

9. Système de perception de droits de péage suivant la revendication 1, dans lequel le terminal (60) portatif est conçu pour être positionné sous une route sur laquelle des véhicules passent.

10. Système de perception de droits de péage suivant la revendication 9, dans lequel le terminal (60) portatif est équipé d'une unité (61) de communication sans fil pour la réception du résultat de l'essai de maintenance par le dispositif de commande (10) de voie de circulation, via l'équipement (8, 9) de communication sans fil de l'installation routière et pour la transmission du résultat de l'essai de maintenance reçu à un dispositif de rang supérieur.

11. Système de perception de droits de péage suivant la revendication 8, dans lequel les moyens d'enregistrement comprennent :
des moyens (62) d'entrée destinés à introduire des données à enregistrer dans l'OBU (1) ; et
des moyens (61) de transmission destinés à transmettre les données d'entrée à l'OBU (1), via le dispositif de commande de voie de circulation, à l'aide de l'équipement (8, 9) de communication sans fil.

12. Procédé pour exécuter un essai de maintenance dans un équipement d'une installation routière d'un système de perception de droits de péage comportant une pluralité d'équipements comprenant un équipement (8, 9) de communication sans fil pour la communication sans fil avec une unité embarquée OBU (1) de véhicule (A) et un dispositif de commande (10) de voie de circulation pour commander la pluralité d'équipements, le procédé comprenant les étapes dans lesquelles :
on transmet une instruction pour lancer l'essai de maintenance d'équipement, au dispositif de commande (10) de voie de circulation, en faisant fonctionner un terminal (60) sans fil portatif par le biais de l'équipement (8, 9) de communication sans fil ; et
on lance l'essai de maintenance d'équipement conformément à l'instruction reçue en provenance du terminal (60) sans fil portatif.

13. Procédé d'essai de maintenance suivant la revendication 12, comprenant en outre, l'étape dans laquelle :
on sélectionne celui des essais de maintenance de la pluralité d'équipements qui doit être exécuté.

14. Procédé d'essai de maintenance suivant la revendication 13, comprenant en outre, l'étape dans laquelle :
on affiche celui des essais de maintenance de la pluralité d'équipements qui doit être sélectionné.

15. Procédé d'essai de maintenance suivant la revendication 14, comprenant en outre, l'étape dans laquelle :
on affiche différentes opérations qui peuvent être soumises à un essai au cours de l'essai de maintenance d'un équipement sélectionné parmi la pluralité d'essais de maintenance d'équipements, affiché à l'étape d'affichage.

16. Procédé d'essai de maintenance suivant la revendication 13, dans lequel l'essai de maintenance de la pluralité d'équipements sélectionné à l'étape de sélection, est un essai d'au moins un parmi un dispositif (12) d'affichage de poste de péage, un dispositif (5) d'affichage routier, un feu (11) de circulation, une barrière (6) et un dispositif d'affichage dans une cabine.
